# EUROPEAN PATENT SPECIFICATION

(11) **EP 2 845 640 B1**
(45) Date of publication and mention of the grant of the patent: **24.10.2018**
(21) Application number: 13466019.0
(22) Date of filing: 06.09.2013
(51) Int. Cl.: B01D 53/86

(54) **Multifunction operation unit for reducing pollutant concentration in a waste gas**
Multifunktion-Verfahrenseinheit zur Reduzierung der Schadstoffkonzentration in einem Abgas
Unité de procédé multi-fonction pour la réduction de la concentration en polluants dans un effluent gazeux

(43) Date of publication of application: 11.03.2015
(73) Proprietor: Vysoké ucení Technické v Brne, 690 01 Brno (CZ)
(72) Inventor: Jecha, David, 58283 Vilemov-Klaster (CZ); Skryja, Pavel, 58827 Rybne (CZ); Brummer, Vladimir, 974 01 Banska Bystrica (SK)
(74) Representative: Malusek, Jiri

(56) References cited:
- EP-A2- 0 326 388
- FR-A1- 2 855 767
- JP-A- H1 181 728
- JP-A- 2002 219 336
- US-A1- 2006 204 417
- US-A1- 2011 288 184

## Description

### Technical field

The invention relates to the structure of a multifunction experimental unit for reducing pollutants from waste gas along with adjacent pipeworks including measuring, regulating and safety members.

### State of the art

At the present, the demand for new gas purification technologies is growing due to more stringent emission limits. Many enterprises have to face significant difficulties when they strive to meet the emission standards. For this reason, enterprises and corporation initiate the development, implementation and testing of various gas purification technologies which should meet new, more exacting technical standards as well as the requirements of new legal and technical regulations.

Existing operation units enable the suitability of purification technologies to be verified before taking a final decision relating to a new technological investment. Nevertheless, one of the negative properties of such common operation units consists in their insufficient compactness resulting in a low level of mobility.

In practical applications, combustion chambers based on the thermal oxidation technology are used. However, the latter method provides a low level of energy efficiency. I requires additional heat to be supplied for the combustion of waste gases which makes it expensive. The overall trend consists in that the transition to the catalytic oxidation is increasingly considered. This is due to the fact, the catalytic oxidation can often provide a notable saving of operating costs. Nevertheless, a suitable device for testing the technology used for the purification of waste gases and fumes, particularly that based on the catalytic oxidation, has not been presented so far.

The essay "Heck R. M., Farrauto R. J., Gulati S. T., 2002, Catalytic air pollution control - Commercial Technology, John Wiley & Sons, New York, USA" contains the statement that it is possible to achieve an efficient and cost-effective solution for the pollution control by means of a suitable catalytic system which would enable the pollutants to be converted into non-pollutants in connection with low energy demands and high conversion rates.

The essay "Cordi E. M., Falconer J. L., Oxidation of volatile organic compounds on Al203, Pd/AI203 and PdO/Al203 catalysts, Journal of Catalysts 162, 1996, p. 104-117" contains the statement that a catalytic combustion process enables a conversion rate of VOCs into CO₂ and H₂O of more than 99% to be achieved and, furthermore, that the process works in a significantly lower temperature range than the thermal combustion process does which results in considerable savings of auxiliary fuel used for superheating the waste gas stream and the corresponding reactor.

The essay "Everaert K., Baeyens J., Catalytic combustion of volatile organic compounds, Journal of Hazardous Materials B109, 2004, p. 113-139" contains the statement that the conventional direct-combustion process of VOCs requires the temperature range of 800-1200 °C for the complete decomposition of VOCs which results in high operating costs. In this context, the catalytic combustion process appears to be a very promising one.

The essay "Liotta L. F., Catalytic oxidation of volatile organic compounds on supported noble metals, Applied Catalysis B: Environmental 100, 2010, p. 403-412" contains the statement that volatile organic compounds (VOC) considerably contribute to the formation of the photochemical smog having subsequent unfavourable influence on the quality of the climate. There are only a few techniques available for reducing the VOC emissions, including the catalytic reduction which is particularly suitable for more diluted concentrations of VOCs.

The catalytic units themselves are known, for example, from the documents US 5,055,275, US 4,004,887, US 4,186,172, US 4,220,625, US 4,381,590, or US 4,795,616.
The document WO 2006/079026 discloses a method for catalytic reforming of heavy gasoline. In the corresponding description, reactors are also mentioned. However, the disclosure does not contain any more detailed constructional specification of such reactors. The document AU 2006206278 discloses and improved catalytic reforming unit, the document AU 2005228862 discloses a catalytic cracking unit and the document CA 2 478 997 discloses a method for eliminating nitrogen oxides from flue gases, again, however, without any more detailed constructional specification of the respective catalytic reactors.

*In* US 2006/0204417 *there is a method for treating emissions described with a unit, where inner space in the frame of the unit determined for catalyst is filled with compact catalyst unit which is segmented into two groups, in which catalyst is laid. Those units are the firm part of the segment housing and the regulation of the gas flow is possible only by opening or closing of flappers and due to this a part of catalyst bed can be laid up from the function. This configuration can solve only opertional situations e.g. reaction to the change of gas flow velocity to enable the highest possible effectivity of cataclyst. The user only reacts on arising conditions during the operation. There is no possibility to set up the unit in advance according to the expected circumstances of the operation mode.*

*In* US 2011/0288184 *modular plant for removal of polutants is presented, where the unit can be composed by sections in a workshop and mounted on site, nevertheless it is only about the comfort of assembly. There are tests mentioned but obviously only common mechanical tests are ment not catalyst operational tests. The fact that the sections are pre-prepared in the workshop does not change the impossibility of amendments of the characteristics of catalyst on a operation unit more then in the previous mentioned unit.*

It is the object of the invention to present a multifunction experimental unit for reducing pollutants from waste gas wherein such unit should provide a convenient degree of compactness, modularity and mobility. Moreover, the constructional variability of the unit according to the invention should make the same usable for testing various types of technologies used for eliminating pollutants from waste gases or fumes by means of diverse types of catalytic converters.

### Summary of the invention

The above drawbacks are largely eliminated by the multifunction experimental unit for reducing pollutants *according to the claim 1.*

In still another preferred embodiment, the reactor is provided with a device for measuring the pressure loss of the flue gas or waste gas across the catalyst, the pressure loss being expressed by means of the corresponding pressure difference, each block of the reactor is provided with a temperature measuring device and the output of the reactor is provided with a device for measuring the composition of flue gases for the purpose of determining the efficiency of the catalyst type used.

In a further preferred embodiment, the unit is provided with a pressure vessel, which serves as a safety element for enabling the passageways of the flue gas to be inertized with nitrogen, and with safety bypass valves for conducting the flue gas or waste gas away from the reactor.

### Brief description of the drawings

The invention will be further explained by means of the accompanying drawings wherein Fig. 1 shows the technological flowchart of the experimental multifunction reactor unit according to the invention including the inlet and outlet conduits and the peripheral measuring and regulating instrumentation, Fig. 2 shows the experimental multifunction unit in a side view, Fig. 3 shows the experimental multifunction unit in a sectional view, Fig. 4 shows the experimental multifunction unit in a top view, Fig. 5 shows the portions of the body of the experimental multifunction unit in a top view, Fig. 6 shows one of the portions of the body of the experimental multifunction unit in a sectional view, Fig. 7 shows the gaskets arranged between the individual portions of the unit, Fig. 8 shows a built-in structure in a top view, Fig. 9 shows a built-in structure in a side view, Fig. 10 shows the upper transition part in a top view and Fig. 11 shows the lower transition part in a bottom view.

### Preferred embodiment

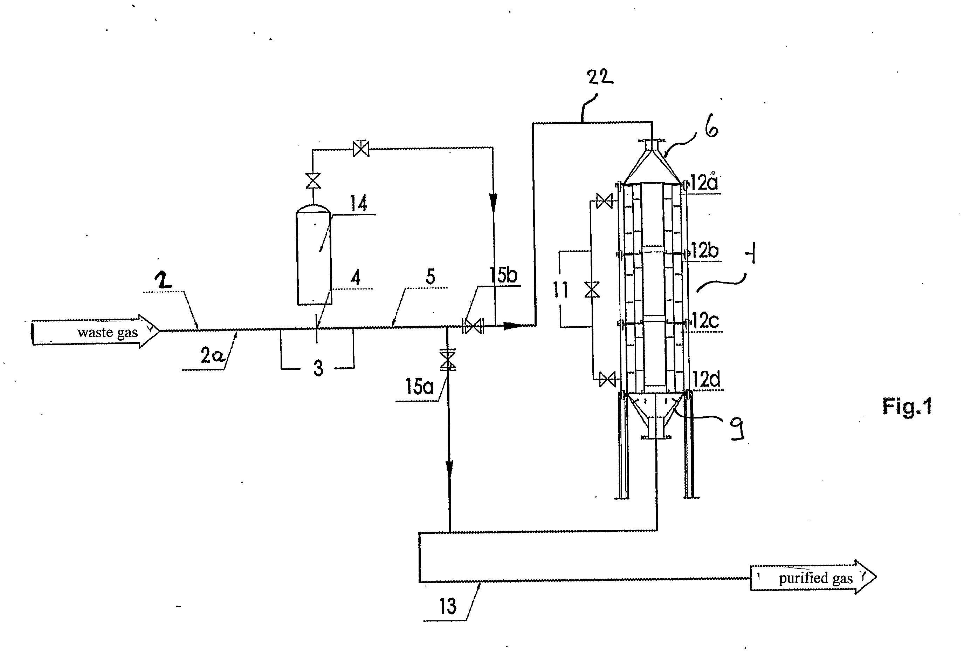

The technological flowchart, which is shown in Fig. 1, illustrates an experimental multifunction unit according to the invention wherein the unit comprises the reactor 1, the characteristics of the polluted flue gases, which flow through the unit, being monitored by the temperature measuring device 2, the pressure measuring device 2a, the flowrate measuring device 3, which establishes a corresponding pressure difference in the aperture 4, and the measuring device 5 for measuring the composition of flue gases.

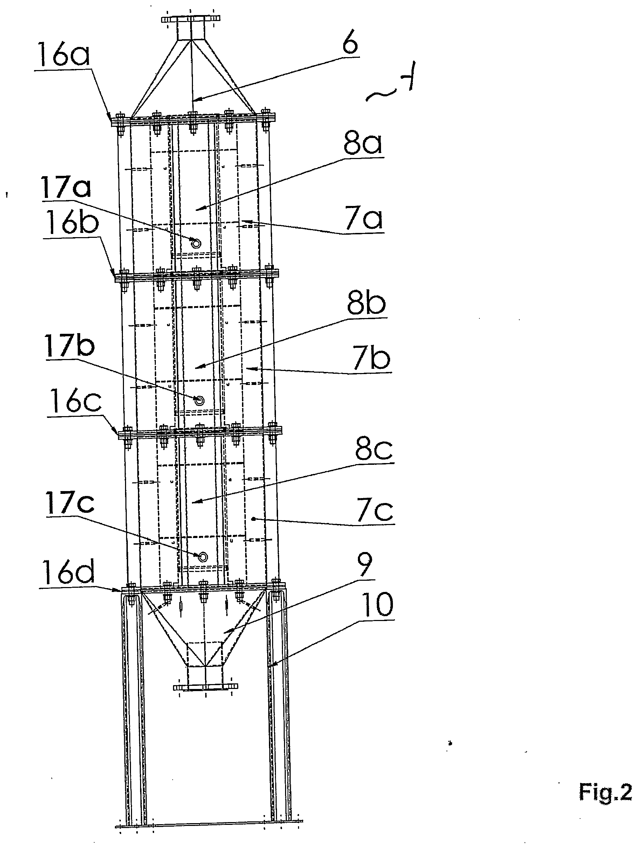

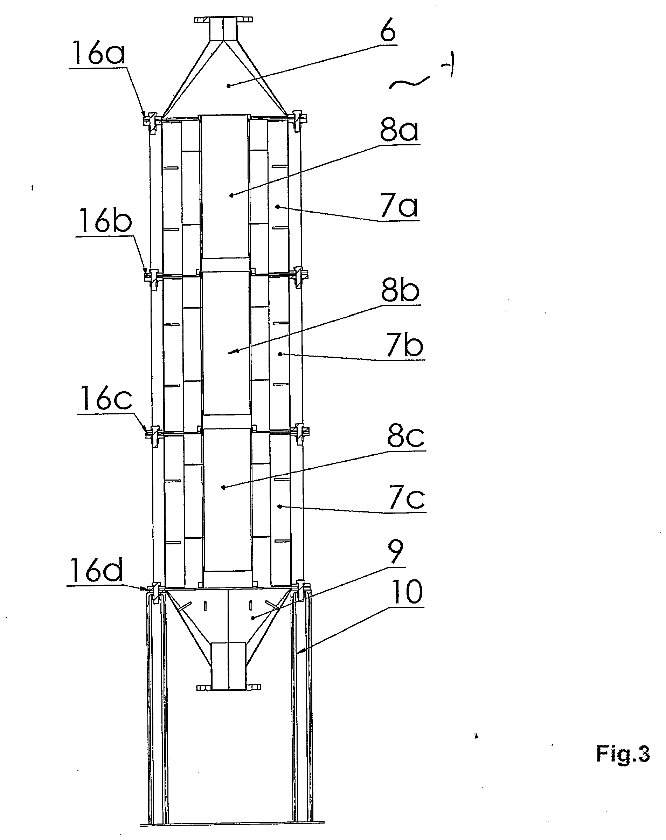

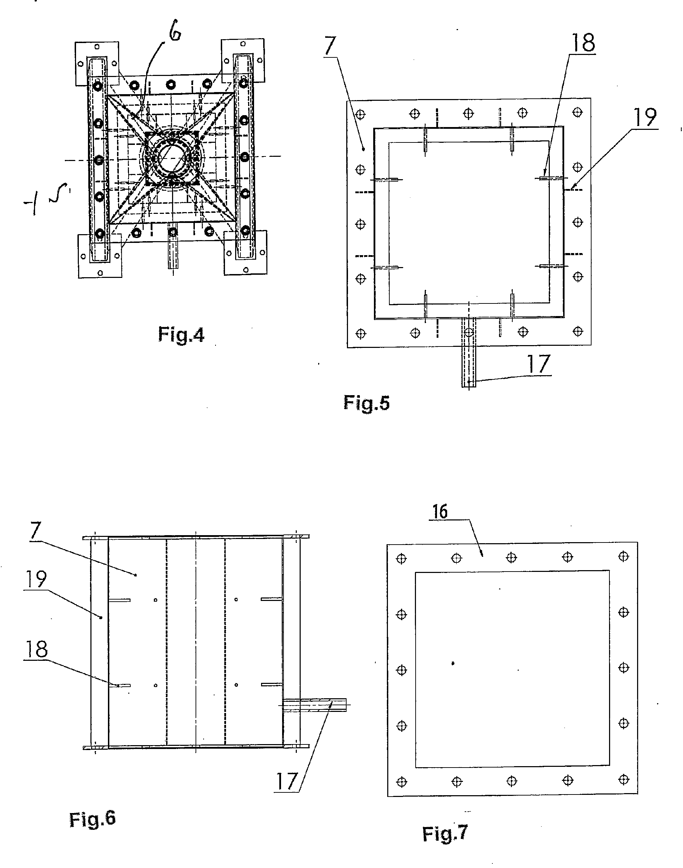

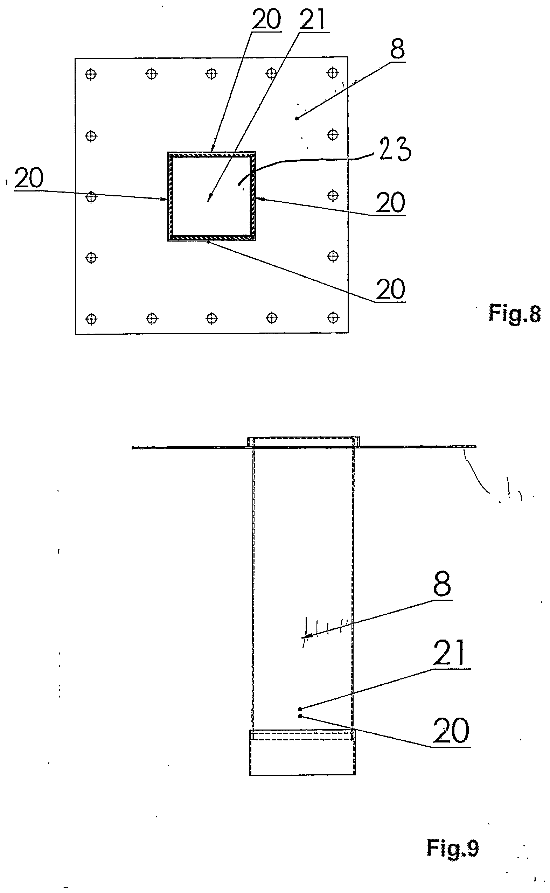

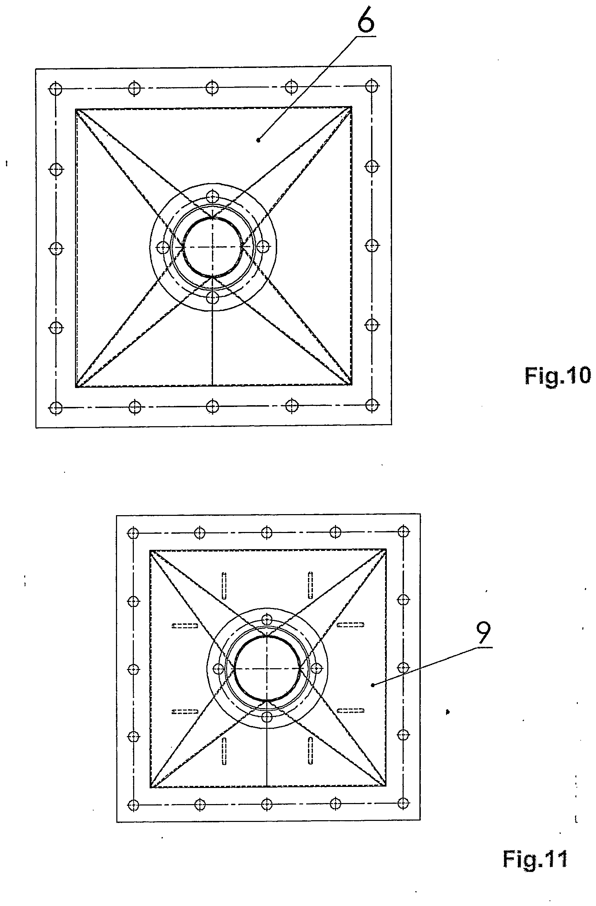

The subsequent Figures 2, 3, 4, 10 and 11 show the details of the reactor 1 in auxiliary views. The flue gases enter the body of the reactor 1 through the conduit 22, which is connected to the top inlet part 6 of the reactor. The details of the top inlet part 6 are illustrated in Fig. 10. As best seen in Figs. 4, 10 and 11, the reactor 1 has a square ground plan and the body of the reactor 1 is composed of three equal portions 7a, 7b and 7c. The individual portions 7a, 7b and 7c of the body of the reactor 1 and the transition parts, namely the top inlet part 6 and the bottom outlet part 9, are separated by the gaskets 16a to 16d, respectively, the latter being heat resistant up to the maximum temperature of 800 °C. The details of a gasket are shown in Fig. 7. Each of the portions 7a, 7b and 7c of the body of the reactor 1 is provided with a general-purpose inlet 17a, 17b and 17c, e.g. with an inlet for supplying cooling air, for cooling the flue gases in case of a reactor provided with a split catalytic bed or for connecting auxiliary measuring instrumentation to the reactor. Moreover, each of the portions 7 of the body of the reactor 1 is provided with a set of bayonet twist-lock mandrels 18 fixed to the inner side of the former and designed for securing an inner insulation layer and with the ribbing 19 designed to maintain the shape stability of the structure when the latter is subject to the operating temperature, as best seen in Fig. 6.
In case, that a monolithic or bulk catalyst is used, the unit also comprises the built-in structures 8a to 8c arranged inside of each portion 7 of the body of the reactor 1. The latter ones are visible in Figs. 8 and 9. The individual portions 7 and the built-in structures 8 are interconnected with bolts in a detachable manner.

In case that a bulk catalyst is used, the catalyst is filled in the cartridge 23 of the built-in structures 8a to 8c. Each layer of the bulk catalyst is provided with a covering layer of an inert material consisting of annular or spherical particles and ensuring the protection of the catalytic converter as well as the homogenization of the gas stream. In case that a monolithic catalyst is used, such catalyst is secured inside the cartridge of the built-in structure 8 by means of the bolts 20 located on the side wall of the built-in structure 8. In case that a bulk catalyst is used, a screen 21, which is only indicated by the respective reference numeral in the figures, is placed onto the bolts 20 in order to prevent the catalyst from falling down through the given built-in structure 8. After passing through the entire reactor 1, the purified flue gases leave the same by means of its bottom outlet part 9. The details of the bottom outlet part 9 are illustrated in Fig. 11. The reactor 1 is supported by the pedestals 10. While the flue gases are passing through the reactor 1, the device 11 for measuring the pressure difference is determining the corresponding pressure loss of the flue gases across the catalyst. This is obvious from the technological flowchart illustrated in Fig. 1. Furthermore, each reactor block is provided with the temperature measuring devices 12a to 12d, respectively. In order to determine the efficiency of the catalyst type used, the composition of the flue gases leaving the outlet of the reactor is measured by the measuring device 13.

In the testing version, the uppermost portion 7a was filled with a monolithic matter, which was not covered by a catalytic layer and was serving for the homogenization of the gas stream, and the remaining two portions 7b and 7c were filled with a catalyst.

The safety features of the unit according to the invention include the pressure vessel 14 for enabling the passageways of the flue gas to be inertized with nitrogen and the safety bypass valves 15a and 15b for conducting the flue gas or waste gas away from the reactor. The entire pipework, which includes gas and fume passageways, as well as the reactor are provided with insulation.

When a monolithic catalyst is used, the individual monoliths are inserted into the interior space of the built-in structures 8a to 8c.

The presented unit is a multifunction experimental unit for eliminating pollutants from waste gas. The unit is variable, mobile and particularly suitable for performing long-term tests of catalysts both in laboratory and in environments.

The unit according to the invention enables the suitability of planned purification technologies to be verified before taking a final decision relating to the introduction of a new technology or to the modification of an existing technology. Thus, it minimizes the risk of possible economic losses which could arise due do the problems connected with the use of a technology that has not undergone any test in an experimental environment. With respect to the technological reliability and to the possibility of technical troubleshooting, it is very favourable to use a experimental device which is able to reveal possible technical problems and recommend a procedure for eliminating them.

The unit according to the invention represents such a experimental device which is unique in the art. Conventional units, which are used for testing catalysts, have notably smaller dimensions and the efficiency of a catalyst can be tested with only a very small amount of produced catalyst grains. This, however, does not reflect other problems, which may arise when the catalyst is used in an industrial scale, such as clogging, possible loss of activity and efficiency or adverse effect of catalytic poison which may be contained in the processed waste gas or flue gas.

The proposed unit has compact constructional dimensions. Further advantages of the unit according to the invention consist in its versatility and mobility. The unit can be easily transported to the place where testing is to be performed. Owing to the multi-storey constructional arrangement with removable built-in structures, the unit according to the invention enables various techniques to be tested which are used for eliminating pollutants from waste gases or flue gases. In particular, the elimination of VOC, CO or deNOₓ with the use of both bulk and monolithic catalysts can be tested. After removing the built-in structures from the unit, even the elimination of deSOₓ and the filtration of solid matters can be tested. The unit according to the invention is primarily intended to be used with monolithic catalysts. Nevertheless, it can be also used with bulk catalysts carried by a fixed catalytic bed.

For the purpose of evaluating the efficiency of the catalyst or of another technique used for purifying waste or flue gases, the inlet and outlet gas passageways as well as the reactor itself are equipped with measuring devices which are adapted for determining the inlet and outlet compositions, flowrate, pressure, pressure loss and temperature of the respective gas.

The protection of the catalyst is an important issue when processes comprising oxidising reactions are involved. This is due to a significant temperature increase during experimental oxidising processes. In the course of testing, the temperature might exceed the maximum value permitted for the catalyst, causing the latter to be damaged or even destroyed. The catalytic bed can be split into any number of portions. According to the particular application, cooling air may be introduced between such portions in order to prevent any possible damage to the catalyst used.
For the time being, the quarter-operation and experimental units (i.e. those designed in the scale of 1:100 to 1:1000 when compared to full-size industrial applications) of the proposed type are not widespread in the chemical industry and among the manufacturers who could use them for performing both short-term and long-term tests.

### Industrial applicability

Many chemical producers have to cope with the reduction of the VOC and CO emissions. In the case that they are currently using catalytic oxidation processes, they increasingly consider the transition to the catalytic oxidation. This is due to the fact, the catalytic oxidation often provide a notable saving of operating costs. Thus, the unit according to the invention enables the suitability of the application of the catalytic oxidation technology to be assessed in a experimental scale before taking a final decision relating to a possible technological investment.

## Claims

1. Multifunction experimental unit for reducing pollutants from waste gas, it comprises a reactor having a square ground plan, the reactor body (1) having a multi-storey constructional arrangement composed of three equal portions (7a, 7b, 7c), the individual portions (7a, 7b, 7c) of the reactor body (1) as well as the top inlet and bottom outlet parts (6, 9) of the reactor being separated by the gaskets (16a to 16d) inserted therebetween, said gaskets being heat resistant up to the temperature of 800 °C, each of the portions (7a, 7b, 7c) of the reactor body (1) being provided with a general-purpose inlet (17a, 17b and 17c), e.g. with an inlet for supplying cooling air, for cooling the flue gases in case of a reactor provided with a split catalytic bed or for connecting auxiliary measuring instrumentation to the reactor, each of the portions (7) of the reactor body (1) further being provided with both exterior and interior insulation layers and with a ribbing (19) designed to maintain the shape stability of the structure when the latter is subject to the operating temperature, wherein the interior of each portion (7) of the reactor body (1) accommodates built-in structures (8a to 8c), a catalytic converter being arranged inside hollow spaces (23) of the built-in structures (8a to 8c), the individual portions (7) and the built-in structures (8) being mutually detachable, and wherein:
a) the catalytic converter comprises a bulk catalyst and each built-in structure is provided with a screen for preventing the particles of the bulk catalyst from falling down through that built-in structure, the screen being fixed to a side wall thereof with bolts; or
b) the catalytic converter comprises a monolithic catalyst and the monolithic catalyst is arranged inside the hollow space of the built-in structure and fixed to an inner side wall of the same by means of bolts.

2. Multifunction experimental unit according to claim 1, **characterized in that** the reactor (1) is provided with a device (11) for measuring the pressure loss of the flue gas or waste gas across the catalyst, the pressure loss being expressed by means of the corresponding pressure difference, each block of the reactor is provided with a temperature measuring device (12a to 12d) and the output of the reactor is provided with a device (13) for measuring the composition of flue gases for the purpose of determining the efficiency of the catalyst type used.

3. Multifunction experimental unit according to any of the preceding claims, **characterized in that** it is provided with a pressure vessel for nitrogen (14), which serves as a safety element for enabling the passageways of the flue gas to be inertized with nitrogen, and with safety bypass valves (15a and 15b) for conducting the flue gas or waste gas away from the reactor (1).

## Patentansprüche

1. Multifunktion-Verfahrenseinheit zur Reduzierung der Schadstoffkonzentration in einem Abgas, die ein Reaktor (1) beinhaltet, der einen Quadratgrundriss hat und der Reationkörper als mehrstöckig durchgeführt ist und er ist aus drei identischen Teilen (7a, 7b a 7c) zusammengesetzt, wobei zwischen den einzelnen Teilen (7a, 7b a 7c) des Reaktorkörpers (1) und einem Obeneintritt (6) und Untenaustritt (9) Dichtungen (16a bis 16d) die hitzewiderständig bis die Temperatur von 800 °C sind, wobei jeder Teil (7a, 7b a 7c) des Reaktorkörpers (1) einen universellen Eintritt (17a, 17b a 17c) hat, z.B. für Zufuhr des Kühlungsluftes, zur Verbrennungsgaskühlung im Fall der Verteilung des Katalysatorbettes auf mehrere Teile, oder für weitere Messtechnik, wobei jeder Teil (7) des Reaktorkörpers (1) aus der inneren Seite als auch aus der äusseren Seite eine Isolation und Rippen (19) für das Einhalten der Formbeständigkeit der Konstruktion bei der Operationstemperatur hat, wobei in Innen von jedem Teil (7a, 7b a 7c) des Reaktorkörpers (1) Einbauteile (8a až 8c) angeordnet sind, der Katalysator ist in hohlen Kassetten (23) in den Einbauteilen (8a až 8c) angeordnet, wobei einzelne Teile (7) und Einbauteilen (8) miteinander lösbar sind; und wobei
c) der Katalysator ist ein sandiger Katalysator und jeder Einbauteil ist mit einem Sieb zum Verhüten des Durchfalls von Partikeln des sandigen Katalysators durch den Einbauteuil versehen, wobei das Sieb ist zu den Aussenwänden von dem Einbauteil mit den Schrauben befestigt; oder
d) der Katalysator ist ein Monolit-Katalysator und dieser Monolit-Katalysator in dem hohlen Raum der Einbauteles angeordnet und zu den Aussenwänden von dem Einbauteil mit den Schrauben befestigt ist.

2. Multifunktion-Verfahrenseinheit nach dem Anspruch 1, **dadurch gekennzeichnet, dass** der Reaktor (1) mit einer Messeinrichtung (11), für das Messen von dem Druckverlust des Abgases auf dem Katalysator, versehen ist, wobei der Druckverlust durch das Messen der Druckdifferention ausgedruckt ist, und jeder Reaktorblock ist mit einer Messeinrichtung (12a bis 12d) für das Messen der Temperatur versehen und auf dem Austritt ist der Reaktor mit einer Messeinrichtung für das Messen der Abgaszusammensetzung für die Ermittlung der Effizienz des verwendeten Typs vom Katalysator versehen.

3. Multifunktion-Verfahrenseinheit nach einem vorübergehenden Ansprüch, **dadurch gekennzeichnet, dass** sie mit einer Druckflasche (14) für Nitrogen versehen ist, die als ein Sicherungselement für die Ermöglichung der Inertisation der Abgaswege mit dem Nitrogen dient und mit Ventilen (15a a 15b) für die Abgasableitung aus dem Reaktor (1).

## Revendications

1. Unité de procédé multi-fonction pour la réduction de la concentration en polluants dans un effluent gazeux, comprenant un réacteur (1) à plan carré et un corps du réacteur (1) qui est réalisé à plusieurs étages est qui se compose de trois parties identiques (7a, 7b et 7c), entre les parties individuelles (7a, 7b et 7c) du corps du réacteur 1 et l'entrée supérieure (6) et la partie de sortie (9) étant insérés les joints d'étanchéité (16a jusqu'à 16d) résistants à la température allant jusqu'à 800 °C, chaque partie (7a, 7b et 7c) du corps du réacteur 1 comportant une entrée universelle (17a, 17b et 17c), par ex. pour l'amenée d'aire de refroidissement pour refroidir les fumées de combustion dans le cas de séparation du lit catalytique en plusieurs parties, ou pour une autre technique de mesure, chaque partie (7) du corps du réacteur (1) comportant en outre de l'intérieur ainsi que de l'extérieur un isolant et des nervures (19) pour maintenir la stabilité de forme de la structure à une température de fonctionnement, à l'intérieur de chaque partie (7a, 7b et 7c) du corps du réacteur (1) étant placés des inserts (8a jusqu'à 8c), le catalyseur étant disposé dans des casettes creuses (23) que comportent les inserts (8a jusqu'à 8c), les parties (7) et les inserts (8) individuels étant séparables l'un de l'autre, étant donné que
e) le catalyseur est de type à lit fluidisé et chaque insert est équipé d'un filet empêchant la chute des particules du catalyseur à lit fluidisé à travers l'insert, le filet étant fixé aux parois latérales des inserts à l'aide des vis; ou
f) le catalyseur est monolithique et le catalyseur monolithique est disposé dans l'espace creux de l'insert, étant fixé à la parois latérale de l'insert à l'aide des vis.

2. Unité de procédé multi-fonction selon la revendication 1, **caractérisée en ce que** le réacteur (1) est muni d'un dispositif de mesure (11) pour mesurer la perte de charge des fumées de combustion ou du gaz résiduaire sur le catalyseur, la perte de charge étant exprimée par la mesure de la différence de pression et chaque bloc du réacteur étant muni d'un dispositif de mesure (12a jusqu'à 12d) pour mesurer la température et à la sortie le réacteur étant muni d'un dispositif (13) pour mesurer la composition des fumées de combustion pour déterminer l'efficacité du type de catalyseur utilisé.

3. Unité de procédé multi-fonction selon l'une quelconque des revendications précédentes, **caractérisée en ce que** elle est munie d'une bouteille de gaz (14) d'azote servant d'organe de sécurité pour permettre l'inertisation des voies des fumées de combustion à l'aide de l'azote et des vannes (15a et 15b) pour évacuer les fumées de combustion hors du réacteur (1).
